(19) Europäisches Patentamt
European Patent Office
Office européen des brevets

(11) Veröffentlichungsnummer: **0 187 936**
**B1**

(12) **EUROPÄISCHE PATENTSCHRIFT**

(45) Veröffentlichungstag der Patentschrift: **31.10.90**

(51) Int. Cl.$^5$: **C 08 J 5/22**, B 01 J 47/12

(21) Anmeldenummer: **85115261.1**

(22) Anmeldetag: **02.12.85**

(54) **Verfahren zur Herstellung einer permselektiven und flexiblen Anionenaustauschermembran.**

(30) Priorität: **27.12.84 DE 3447463**

(43) Veröffentlichungstag der Anmeldung:
**23.07.86 Patentblatt 86/30**

(45) Bekanntmachung des Hinweises auf die Patenterteilung:
**31.10.90 Patentblatt 90/44**

(84) Benannte Vertragsstaaten:
**AT BE CH DE FR GB IT LI NL SE**

(56) Entgegenhaltungen:
**DE-A-2 222 905**
**DE-C-3 319 798**

(73) Patentinhaber: **FRAUNHOFER-GESELLSCHAFT ZUR FÖRDERUNG DER ANGEWANDTEN FORSCHUNG E.V.**
**Leonrodstrasse 54**
**D-8000 München 19 (DE)**

(72) Erfinder: **Reiner, Andreas, Dr.**
**Alte Strasse 12**
**D-7802 Merzhausen (DE)**

(74) Vertreter: **Kraus, Walter, Dr. et al**
**Patentanwälte Kraus, Weisert & Partner**
**Thomas-Wimmer-Ring 15**
**D-8000 München 22 (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 187 936 B1

**Beschreibung**

Die Erfindung betrifft ein Verfahren zur Herstellung einer permselektiven und flexiblen Anionenaustauschermembran.

In der DE 3 319 798 C1 wird ein Verfahren zur Herstellung einer permselektiven Anionenaustauschermembran beschrieben. Bei diesem bekannten Verfahren werden ausschließlich Polymere zur Herstellung verwendet. Dadurch entfallen alle Schwierigkeiten, die mit der Handhabung von Monomeren verbunden sind, und es resultiert ein sehr einfaches Herstellungsverfahren. Bei diesem bekannten Verfahren findet eine Quaternisierung des Vinylpyridinstickstoffs mit der Halogenmethylgruppe des Vinylbenzylchlorids statt. Es entsteht ein makromolekulares Netzwerk. Bei einem stöchiometrischen Verhältnis von Vinylpyridinstickstoff:Vinylbenzylchlorid (N:X) von 1:1 entsteht ein Netzwerk mit unmittelbar benachbarten Nitroniumfestkationen. Das Netzwerk ist durch sehr kleine Hohlräume zwischen den Netzwerkbögen und somit durch sehr hohe Permselektivität für Anionen gekennzeichnet (vgl. Formel XI:

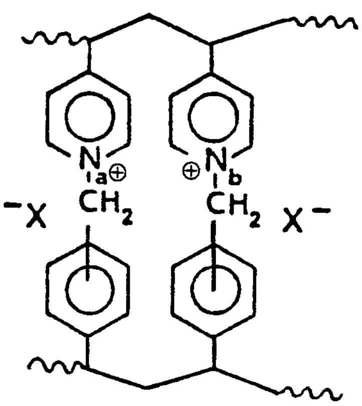

(XI)

die hohe Permselektivität für Anionen der oben dargestellten struktur ist jedoch makroskopisch nicht nutzbar, weil die mit N:X = 1:1 gezogenen Filme extrem brüchig sind. Bereits durch geringe mechanische Belastungen, wie sie beim Einbau der Membran in die galvanische Zelle und während des Zellbetriebs durch kleine Druckschwankungen unvermeidlich sind, führen zum Bruch der Membran. Ursache der Brüchigkeit ist die starke Festkationenabstoßung der unmittelbar benachbarten Nitroniumfestionen, deren Möglichkeiten einander auszuweichen durch Bindung an die Polymerkette und durch die Quaternisierungsreaktion stark eingeschränkt sind.

Durch Synthese von Membranen mit N:X > 1 entstehen Strukturen, wie sie in der folgenden Formel XII dargestellt sind:

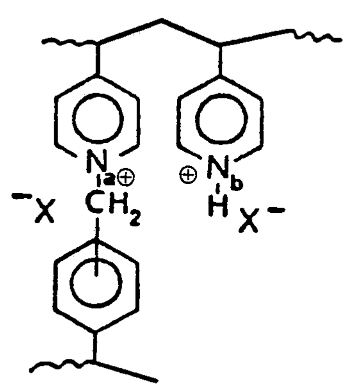

(XII)

Die nichtquaternisierten N-Atome werden im salzsauren Elektrolyten zu Nitroniumfestkationen.

Die Membranen mit N:X > 1 sind weniger brüchig als Membranen mit N:X = 1:1. Ursache für die geringere Brüchigkeit ist die kleinere Festkationenabstoßung zwischen den Nitroniumkationen $N_a^+$ und $N_b^+$ bei der in Formel XII dargestellten Struktur.

$N_b^+$ ist nicht mit dem Vinylbenzylhalogenid quaternisiert und hat deshalb etwas größere Ausweichmöglichkeiten vor $N_a^+$ als $N_b^+$ bei der in XI dargestellten Struktur. N:X > 1 bedeutet aber auch größere Hohlräume zwischen den Netzwerkbögen und daher eine Abnahme der Permselektivität für Anionen, ohne daß die Membran ausreichend flexibel ist. Die Experimente zeigten, daß ausreichende Flexibilität der Membran erst bei N:X-Werte von ca. 10:1 erreicht wird. Bei derartig hohen Werten von N:X sind die Hohlräume zwischen den Netzwerkbögen so groß, daß die Permselektivität für Anionen gegen Null strebt. Zahlreiche Experimente zeigten, daß es kein N:X-Verhältnis gibt, das mit dem in der DE

3 319 798 C1 beschriebenen Verfahren Membranen liefert, die ausreichende Permselektivität für Anionen und ausreichende Flexibilität zeigen.

Das in der DE 3 319 798 C1 beschriebene Verfahren liefert lediglich Membranen, die entweder flexibel, aber unselektiv oder selektiv, aber extrem brüchig sind. Andererseits wird in der DE 3 319 798 C1 ein Verfahren zur Herstellung von Anionenaustauschermembranen beschrieben, dessen einfache Durchführbarkeit einzigartig ist.

Bei dem aus der DE—A—22 22 905 bekannten Verfahren zur Herstellung von permselektiven Membranen aus polymerem Material wird von einem Terpolymeren aus Butadien, Styrol und einem Vinylpolymeren ausgegangen. Die gebildete Membran wird durch Erhitzen in Gegenwart eiens freie Radikale bildenen Initiators vernetzt, und die Stickstoffatome des Vinylpyridins werden durch Behandlung mit einer niedermolekularen Quaternisierungskomponente quaternisiert. Über die Steifigkeit der fertigen Membranen, die überwiegend vom Styrolgehalt abhängen soll, finden sich in dieser Druckschrift keine Angaben.

Der vorliegenden Erfindung liegt die Aufgabe zugrunde, ein einfach durchzuführendes Verfahren zur Herstellung von Anionenaustauschermembranen zur Verfügung zu stellen, gemäß dem Membranen mit hoher Anionenselektivität und ausreichender Flexbilität erhalten werden können.

Gegenstand der Erfindung ist somit ein Verfahren zur Herstellung einer permselektiven und flexiblen Anionenaustauschermembran durch Aufbringen einer Lösung eines Polyvinylpyridins und/oder dessen Derivat enthaltenden Polymerisats als Anionenaustauschersubstanz auf ein Trägermaterial und Verdunsten des Lösungsmittels, das dadurch gekennzeichnet ist, daß eine Lösung eines Copolymeren aus Vinylpyridin und/oder einem Derivat davon und aus einem Monomeren Y, das weder während der Netzwerkbildung noch im Elektrolyten Festionen bildet, oder aus einem Gemisch solcher Monomeren, die zusätzlich entweder ein Polyvinylbenzylhalogenid oder ein Gemisch von Polyvinylbenzylhalogeniden oder ein zweites Copolymeres aus Vinylbenzylhalogenid und einem oder mehreren Monomeren Y in einem stöchiometrischen Verhältnis von Vinylpyridinstickstoff zu Vinylbenzylhalogenid (N:X) von 1:1 bis 10:1 enthält, auf das Trägermaterial aufgetragen wird, der Film in feuchtem Zustand der Quaternisierung unterworfen wird und gegebenenfalls die gebildete Membran von dem Trägermaterial abgezogen wird.

Überraschenderweise zeigte sich, daß man mit dem erfindungsgemäßen Verfahren permselektive und flexible Anionenaustauschermembranen auf einfache Weise herstellen kann. Erfindungsgemäß wird anstelle des bei dem bekannten, in der DE 3 319 798 C1 beschriebenen Verfahren verwendeten Polyvinylpyridins ein Copolymeres aus Vinylpyridin und/oder einem Derivat davon und aus einem Monomeren Y, das weder bei der Vernetzungsreaktion noch im Elektrolyten Festionen bildet, beispielsweise aus 4-Vinylpyridin (4VP) und Styrol (S), verwendet, das zum Beispiel durch radikalische Copolymerisation hergestellt wird.

Das 4VP-S-Copolymere enthält in statistischer Abfolge Vinylpyridin und Styrol. Durch Quaternisierung des Copolymeren mit dem Polyvinylbenzylhalogenid entsteht bei Raumtemperatur ein makromolekulares Netzwerk, das auch bei N:X = 1:1 hochselektive und ausreichend flexible Anionenaustauschermembranen liefert. Die Flexibilität wird durch die räumliche Trennung der quaternisierten Nitroniumkationen durch Styrol erreicht, wie es in der folgenden Formel dargestellt wird:

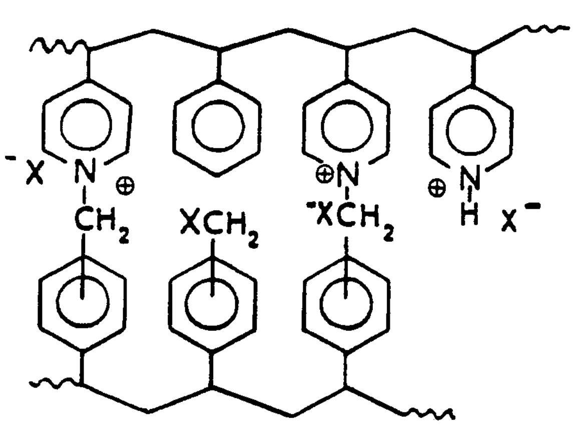

(XIIIa)

N : X = 1

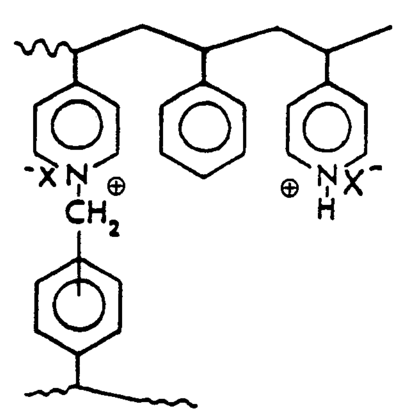

(XIIIb)

N : X > 1

Durch Einbau einer ausreichenden Menge Styrol in das VP-S-Copolymere wird erreicht, daß die Zahl unmittelbar benachbarter Festkationen so klein wird, daß die resultierende Festkationenabstoßung nicht ausreicht, um sich makroskopisch als Brüchigkeit bemerkbar zu machen. Durch den Einbau einer ausreichenden Menge Styrol in das Copolymere lassen sich mit dem erfindungsgemäßen Verfahren permselektive und flexible Austauschermembranen herstellen, wobei N:X = 1 oder N:X > 1 gewählt werden kann. Der Fall N:X = 1 ist besonders dann wichtig, wenn eine Austauschermembran mit maximaler Permselektivität für Anionen (im folgenden als "Permselektivität" bezeichnet) verlangt wird. Der Fall N:X > 1 ist bedeutsam für Anwendungen, bei denen hohe Flexibilität wichtiger ist als das Erreichen der maximal möglichen Permselektivität.

Erfindungsgemäß kann weiterhin anstelle des Polyvinylhalogenids oder Gemisches von Polyvinylbenzylhalogeniden ein zweites Copolymeres aus Vinylbenzylhalogenid und einem Monomeren Y eingesetzt werden. Somit sind erfindungsgemäß die folgenden zwei Kombinationen möglich:

(1) (Vinylpyridin-Y)-Copolymeres + Polyvinylbenzylhalogenid

(2) (Vinylpyridin-Y)-Copolymeres + (Vinylbenzylhalogenid-Y)-Copolymeres

Erfindungsgemäß werden 2-Vinyl- und/oder 4-Vinylpyridin oder deren Derivate der folgenden Formeln XIV und XV

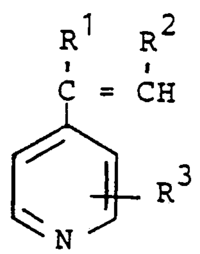

(XIV)

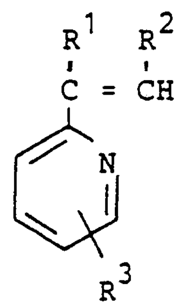

(XV)

verwendet, wobei in den Formeln $R^1$, $R^2$ und $R^3$ gleich oder unterschiedlich sein können und je ein Wasserstoffatom oder eine geradkettige oder verzweigtkettige Alkylgruppe mit 1 bis 4 Kohlenstoffatomen bedeuten. Besonders bevorzugt sind solche Verbindungen, worin $R^1$ und $R^2$ Wasserstoff und $R^3$ Wasserstoff oder eine Alkylgruppe bedeuten. Von diesen Derivaten sind die 4-vinylsubstituierten Derivate besonders bevorzugt. Besonders bevorzugte erfindungsgemäße Verbindungen sind 4-Vinylpyridin mit einer Methyl-, Ethyl-, Isopropyl- oder Tertiärbutylgruppe in 2-Position des Pyridinkerns:

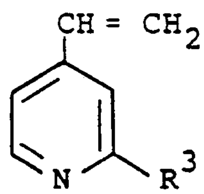

Es ist auch möglich, Gemische aus einer oder mehreren der obigen Verbindungen zu verwenden.

Das Monomere Y, welches in den Copolymeren enthalten ist, muß ein Monomeres sein, das weder bei der Vernetzungsreaktion noch im Elektrolyten Festionen bildet. Es kann aromatisch oder aliphatisch sein. Man kann auch ein Gemisch aus einem oder mehreren aromatischen und/oder aliphatischen Monomeren verwenden. Beispiele für Monomere sind Verbindungen der folgenden Formel III

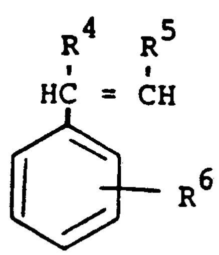

(III)

worin $R^4$, $R^5$ und $R^6$, die gleich oder unterschiedlich sein können, je ein Wasserstoffatom oder eine geradkettige Alkylgruppe mit 1 bis 8 Kohlenstoffatomen oder eine verzweigte Alkylgruppe mit 3 bis 6 Kohlenstoffatomen bedeuten;

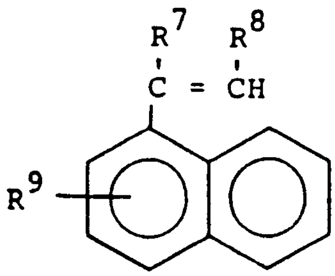

(IV)

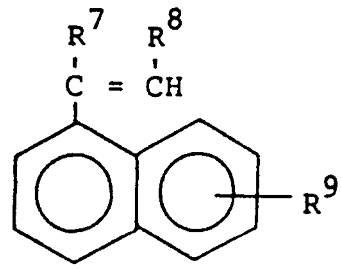

(V)

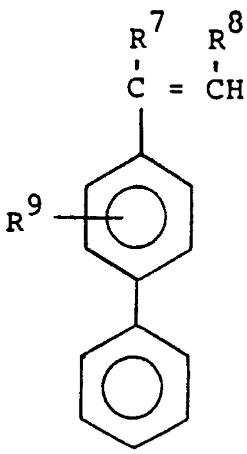

(VI)

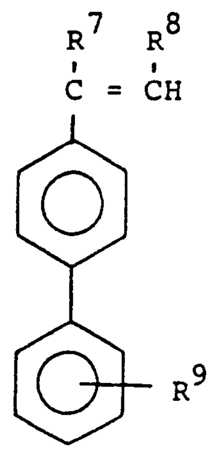

(VII)

oder

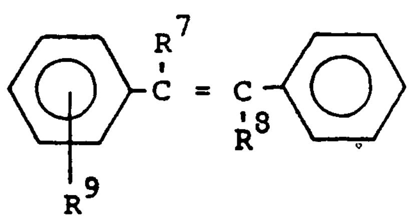

(VIII)

worin $R^7$, $R^8$ und $R^9$, die gleich oder unterschiedlich sein könnem, je ein Wasserstoffatom, eine geradkettige Alkylgruppe mit 1 bis 8 Kohlenstoffatomen oder eine verzweigte Alkylgruppe mit 3 bis 6 Kohlenstoffatomen bedeuten; oder

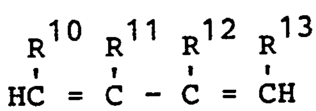

(IX)

worin $R^{10}$, $R^{11}$, $R^{12}$ und $R^{13}$ gleich oder unterschiedlich sein können und je ein Wasserstoffatom oder eine geradkettige Alkylgruppe mit 1 bis 8 Kohlenstoffatomen oder eine verzweigte Alkylgruppe mit 3 bis 6 Kohlenstoffatomen bedeuten; und

$$CH_2{=}CH{-}(CH_2)_q{-}CH_3 \quad (X)$$

worin q für 0 bis 10, vorzugsweise für 0 bis 4 und besonders bevorzugt für 0, 1 oder 2, steht.

Beispiele für geradkettige Alkylgruppen in den obigen Formeln sind Methyl-, Ethyl-, n-Propyl-, n-Butyl- und n-Pentylgruppen. Von diesen sind die Methyl-, Ethyl- und n-Propylgruppe besonders bevorzugt. Beispiele für verzweigte Alkylgruppen mit 3 bis 6 Kohlenstoffatomen sind Isopropyl-, Isobutyl- und tert.-Butylgruppen. Hiervon sind die Isopropyl- und die Isobutylgruppe besonders bevorzugt.

Von den oben genannten Verbindungen sind solche Verbindungen besonders bevorzugt, in denen die

Substituenten $R^4$ und $R^5$, $R^7$ und $R^8$ je ein Wasserstoffatom oder eine Methylgruppe bedeuten und die Ringsubstituenten $R^6$ oder $R^9$ je ein Wasserstoffatom oder eine Methylgruppe bedeuten. Besonders bevorzugt werden erfindungsgemäß Styrol und seine ring-substituierten Derivate Methylstyrol, Ethylstyrol, Isopropylstyrol, Isobutylstyrol, Tertiärbutylstyrol, jeweils in m- oder p-Position, verwendet.

Beispiele für aliphatische Monomere sind Butadien, Propen, Buten und Penten.

Besonders bevorzugte Copolymeren des Vinylpyridins sind (4-Vinylpyridin-Styrol)-Copolymere, (2-Vinylpyridin-Styrol)-Copolymere, (4-Vinylpyridin-Butadien)-Copolymere, (2-Vinylpyridin-Butadien)-Copolymere, (4-Vinylpyridin-Propen)-Copolymere, (2-Vinylpyridin-Propen)-Copolymere, (4-Vinylpyridin-Vinylbiphenyl)-Copolymere und (2-Vinylpyridin-Vinylbiphenyl)-Copolymere.

Die Herstellung der Copolymeren erfolgt in an sich bekannter Weise und soll an dieser Stelle nicht näher erläutert werden. Beispielsweise kann man eine radikalische oder ionische Polymerisation durchführen, die Polymerisation kann als Emulsions- oder Suspensionspolymerisation oder als Polymerisation in der Masse durchgeführt werden. Die Kombination der Eigenschaften der Membranen, nämlich daß diese selektiv und flexibel sind, wird durch Unterbrechung der unmittelbaren Abfolge von Vinylpyridineinheiten in der Polymerkette erreicht. Als Unterbrecher eignen sich alle Monomeren, die eine ausreichende Größe aufweisen und leicht zusammen mit Vinylpyridin polymerisiert werden können.

Erfindungsgemäß wird als weiterer Bestandteil der Membran Polyvinylbenzylhalogenid oder ein Copolymeres aus Vinylbenzylhalogenid und einem Monomeren Y verwendet. Das Vinylbenzylhalogenid, aus dem auch das Polyvinylbenzylhalogenid in an sich bekannter Weise hergestellt wird, besitzt die Formel

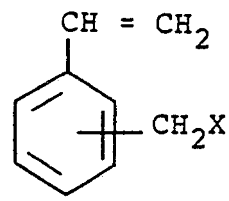

(XVI)

worin X Chlor, Brom oder Jod, vorzugsweise Chlor, bedeutet und die Gruppe $CH_2X$ in ortho-, meta- oder para-Stellung stehen kann. Besonders bevorzugt wird erfindungsgemäß das m- und p-Vinylbenzylchlorid verwendet.

Das Monomere Y in dem Copolymeren aus XVI + Y kann das gleiche Monomere oder ein anderes Monomeres sein wie in dem Copolymeren aus Vinylpyridin. Besonders bevorzugte Copolymere aus Vinylbenzylhalogenid und dem Monomeren sind solche, worin in den obigen Formeln die Substitutenten, die oben im Zusammenhang mit dem Copolymeren aus Vinylpyridin genannten Bedeutungen besitzen. Besonders bevorzugte Copolymere sind XVI + Styrol, XVI + Butadien und XVI + Propen.

In den obigen Copolymeren wird das Verhältnis von Vinylpyridin-Stickstoff:Vinylbenzylhalogenid als N:X angegeben. Erfindungsgemäß werden solche Copolymeren hergestellt bzw. verwendet, bei denen N:X im Bereich von 1:1 bis 10:1 liegt.

Verwendet man ein Gemisch aus (Vinylpyridin-Y)-Copolymerem und Polyvinylbenzylhalogenid, so wird das Copolymere und das Polyvinylbenzylhalogenid im N:X-Verhältnis 10:1, bevorzugt 5:1, besonders bevorzugt 1:1, eingesetzt.

In dem Copolymeren aus Vinylpyridin bzw. Vinylbenzylhalogenid und dem Monomeren Y ist das Verhältnis von Vinylpyridin bzw. Vinylbenzylhalogenid:Y im Bereich von 90:10 bis 20:80, bevorzugt im Bereich von 70:30 bis 30:70, besonders bevorzugt im Bereich von 60:40 bis 40:60.

In dem Gemisch aus (Vinylpyridin-Y)-Copolymerem und (Vinylbenzylhalogenid-Y)-Copolymerem liegt das N:X-Verhältnis im Bereich von 10:1 bis 1:1.

Zur Herstellung der Lösung wird das (Vinylpyridin-Y)-Copolymere in Methylenchlorid oder Chloroform oder Dimethylformamid oder einem Gemisch von zwei oder drei der genannten Lösungsmittel gelöst. Zur Herstellung einer Lösung, die das (Vinylpyridin-Y)-Copolymere und Polyvinylbenzylhalogenid oder das zweite Copolymere enthält, kann man entweder die beiden Bestandteile mischen und die Lösung dann in den genannten Lösungsmitteln herstellen, oder man kann getrennte Lösungen in dem gewünschten Verhältnis herstellen und diese dann entsprechend miteinander vermischen.

Das Lösungsmittel bzw. das Lösungsmittelgemisch muß die Bedingung erfüllen, daß es beide Polymere bzw. Copolymere löst. Wie oben angegeben, sind N und X stöchiometrische Verhältnisse, die durch Einwaage genau zu bestimmen sind. Die Einstellbarkeit bestimmter Wertepaare von Flexibilität und Selektivität durch N $\geqq$ X-Variation ist einfach. Beispielseweise kann man eine Mischung von (Vinylpyridin-Y)-Copolymerem mit Polyvinylbenzylhalogenid oder mit dem Copolymeren aus Vinylbenzylhalogenid und Y in einem bestimmten stöchiometrischen N:X-Verhältnis im Bereich von 1:1 bis 10:1 herstellen. Die Herstellung der Membran erfolgt in an sich bekannter Weise, indem man die Lösung auf einen inerten porenfreien Träger oder auf einen porösen Träger aufbringt. Bevorzugt werden solche Trägermaterialien verwendet, die gegenüber den verwendeten Lösungsmitteln vollständig inert sind, beispielsweise Träger aus einem Teflonfilm. Als Beschichtungsverfahren kann man irgendeines der üblichen Beschichtungsverfahren, wie Beschichtung mit Walzen, Beschichtung mit einer Rakelvorrichtung, Beschichtung durch Eintauchen, durch Aufsprühen etc., anwenden, wobei, die Verfahren gegebenenfalls

wiederholt und/oder kombiniert werden. Nach Durchführung der Beschichtung muß erfindungsgemäß darauf geachtet werden, daß die Vernetzungsreaktion zwischen dem (Vinylpyridin-Y)-Copolymeren bzw. zwischen diesem und den anderen Bestandteilen abläuft. Dies erfolgt, indem man ein lösungsmittelfeuchten Zustand während einer bestimmten Zeit aufrechterhält. Bei niedrigsiedenden Läsungsmitteln oder Lösungsmittelgemischen, beispielsweise bei Methylenchlorid, Chloroform oder einem Gemisch aus diesen beiden Lösungsmitteln, bewahrt man den hergestellten Naßfilm in einer das Lösungsmittel oder Lösungsmittelgemisch enthaltenden Atmosphäre während einer Zeit von 5 Minuten bis mehreren Stunden auf. Die Aufbewahrung des Lösungsmittelnassen Filmes kann bei einer Temperatur von Raumtemperatur bis 40°C erfolgen. Es ist bevorzugt, bei Raumtemperatur zu arbeiten. Bei hochsiedenden Lösungsmitteln oder Lösungsmittelgemischen, wie Dimethylformamid oder einem Gemisch aus Dimethylformamid mit einem halogenierten Kohlenwasserstoff, wie Methylenchlorid oder Chloroform, kann man den hergestellten Film einfach an der Luft stehen lassen.

Die Vernetzungsreaktion kann während einer Zeit von 5 min bis 48 h und bei Temperaturen von 20°C bis 40°C durchgeführt werden.

Durch Aufrechterhaltung des lösungsmittelfeuchten Zustands in den Naßfilmen kommt es bereits bei Raumtemperatur zu einer spontan ablaufenden Quaternisierungsreaktion, wodurch eine vernetzte Anionenaustauschermembran entsteht. Wichtig ist es, daß der lösungsmittelfeuchte Zustand so lang aufrechterhalten wird, bis die beschriebene Reaktion bis zum maximal möglichen Umsatz abgelaufen ist.

Nach Beendigung der Vernetzungsreaktion wird das Lösungsmittel durch einfaches Trocknen, beispielsweise bei einer Temperatur im Bereich von 20°C bis 70°C, vorzugsweise von 20°C bis 30°C, entfernt. Gegenbenenfalls kann die Membran auch im Vakuum getrocknet werden.

Zum Erreichen der maximal möglichen Permselektivität kann die getrocknete Membran bei einer Temperatur im Bereich von 100 bis 180°C, vorzugsweise im Bereich von 100 bis 160°C während einer Zeit von 10 min bis 2 h nachvernetzt werden.

Zur Herstellung einer trägerfreien Membran wird die Membran von der Unterlage abgezogen. Für Anwendungen, bei denen es primär auf einen minimalen elektrischen Widerstand der Membran ankommt und nicht auf ein Maximum der mechanischen Stabilität, sind trägerfreie Membranen trägergestützten Membranen vorzuziehen. Wenn der Anwendungszweck primär ein Maximum der mechanischen Stabilität verlangt, sind trägergestützte Membranen den trägerfreien überlegen. Erfindungsgemäß ist es möglich, beide Arten von Membranen herzustellen.

Die erfindungsgemäße Membran ist eine Anionenaustauschermembran, die auf all den Gebieten, wo derartige Membranen verwendet werden, eingesetzt werden kann, beispielsweise bei galvanischen Prozessen, bei der elektrochemischen Energiespeicherung, der Elektrolyse, der Elektrodialyse, der Gastrennung und der Pervaporation.

Die folgenden Beispiele erläutern die Erfindung.

## Beispiel 1

4-Vinylpyridin (VP) und Styrol (S) werden absolutiert und in einem molaren Verhältnis von 60 (VP):40 (S) in eine Ampulle mit Schliffhahn eingebracht. Der homogenen Mischung wird etwa 1 Gew.-‰ AIBN (Azobisisobuttersäurenitril) zugemischt. Danach wird bei Raumtemperatur durch wiederholtes Evakuieren und Belüften mit $N_2$ der Sauerstoff entfernt. Anschließend wird die Ampulle verschlossen, und bei 50°C wird die Copolymerisation durchgeführt.

Nach beendeter Reaktion wird das Copolymerisat in THF gelöst und mit Petrolether ausgefällt. Das Lösen und Ausfällen wird so lange wiederholt, bis das Copolymere weiß ist und nicht mehr nach Monomeren riecht. Der Niederschlag wird im Vakuum getrocknet.

In getrennten Gefäßen werden Lösungen des VP-S-Copolymeren und von Poly(vinylbenzylchlorid) in Methylenchlorid hergestellt. Durch Wahl der Konzentrationen der beiden Lösungen und durch Wahl der Volumenverhältnisse der beiden Lösungen bei ihrer Mischung wird ein N:X-Verhältnis von 1:1 eingestellt.

Die homogene Mischung wird in zwei gleiche Anteile getrennt. Ein Teil wird zur Herstellung einer trägerfreien Membran auf eine Teflonunterlage gegossen und mit einem Glasstab verteilt. Der zweite Teil wird zur Herstellung einer Membran auf einem Träger verwendet. Man gießt hierzu den zweiten Teil der homogenen Mischung auf ein Glasfaservlies und verteilt die Mischung wieder mit einem Glasstab.

Der trägerfreie und der trägergestützte Naßfilm werden bis zum Ende der Vernetzungsreaktion (etwa 48 Stunden) in ein Gefäß mit gesättigter $CH_2Cl_2$-Atmosphäre gelegt.

Danach werden die Membranen an der Luft getrocknet. Wenn maximale Permselektivität verlangt wird, werden die Membranen bei 140°C bis zu zwei Stunden nachvernetzt. Die trägerfreie Membran wird von der Unterlage abgezogen.

## Beispiel 2

In eine mit reinem $N_2$ gefüllte Ampulle mit Schliffhahn wird ein Reaktionsansatz, bestehend aus 34 Gewichtsteilen Monomerenmischung, 2 Gewichtsteilen Natriumlaurylsulfat, $1 \cdot 10^{-3}$ Gewichtsteilen Kaliumproxodisulfat und 64 Gewichtsteilen frisch abgekochtem Wasser, eingebracht.

Die Monomerenmischung enthält absolutiertes Vinylpyridin (VP) und Butadien (B) in einem molaren Verhältnis von 1:1. Die Ampulle wird geschlossen und die Copolymerisation bei 50°C durchgeführt. Nach etwa 80% Umsetzung wird die Copolymerisation durch Zusetzen von 0,1 Gew.-% Hydrochinon

abgebrochen. Die Copolymerlatexsuspension wird in ein Becherglas gegossen. Nichtumgesetzte VP- und B-Monomeren werden durch Wasserdampf entfernt. Anschließend wird der Latex mit NaCl-Lösung und anschließend mit verdünnter $H_2SO_4$ gefällt. Die an das VP addierte $H_2SO_4$ wird durch Rühren mit NaOH entfernt. Das Copolyer wird auf einem Filter gewaschen und getrocknet.

Die Darstellung des Vinylbenzylchlorid-Styrol-Copolymeren (VBC-S) erfolgt auf dem in Beispiel 1 angegebenen Weg für die Darstellung des VP-S-Copolymeren.

In getrennten Gefäßen werden Lösungen von VP/B- und VBC/S-Copolymeren hergestellt. Durch Wahl der Konzentrationen der beiden Lösungen und durch Wahl der Volumenverhältnisse der beiden Lösungen bei ihren Mischungen wird ein N:X-Verhältnis von 1:1 eingestellt. Man arbeitet dann weiter, wie in Beispiel 1 beschrieben, und erhält eine trägergestützte und eine trägerfreie Membran.

**Patentansprüche**

1. Verfahren zur Herstellung einer permselektiven und flexiblen Anionenaustauschermembran durch Aufbringen einer Lösung eines Polyvinylpyridin und/oder dessen Derivat enthaltenden Polymerisats als Anionenaustauschersubstanz auf ein Trägermaterial und Verdunsten des Lösungsmittels, dadurch gekennzeichnet, daß eine Lösung eines Copolymeren aus Vinylpyridin und/oder einem Derivat davon und aus einem Monomeren Y, das weder während der Netzwerkbildung noch im Elektrolyten Festionen bildet, oder aus einem Gemisch solcher Monomeren, die zusätzlich entweder ein Polyvinylbenzylhalogenid oder ein Gemisch von Polyvinylbenzylhalogeniden oder ein zweites Copolymeres aus Vinylbenzylhalogenid und einem oder mehreren Monomeren Y in einem stöchiometrischen Verhältnis von Vinylpyridinstickstoff zu Vinylbenzylhalogenid (N:X) von 1:1 bis 10:1 enthält, auf das Trägermaterial aufgetragen wird, der Film in feuchtem Zustand der Quaternisierung unterworfen wird und gegebenenfalls die gebildete Membran von dem Trägermaterial abgezogen wird.

2. Verfahren nach Anspruch 1, dadurch gekennzeichnet, daß das Copolymere aus Vinylpyridin sich wiederholende Einheiten der folgenden Formeln Ia oder Ib

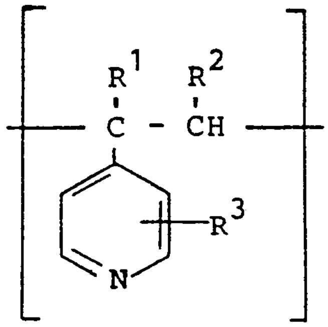 (Ia) und/oder 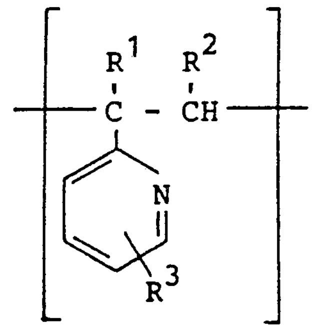 (Ib)

enthält, worin $R^1$, $R^2$ und $R^3$ gleich oder unterschiedlich sein können und je ein Wasserstoffatom oder eine geradkettige oder verzweigte Alkylgruppe mit 1 bis 4 Kohlenstoffatomen bedeuten.

3. Verfahren nach Anspruch 1 oder 2, dadurch gekennzeichnet, daß das Polyvinylbenzylhalogenid oder das das Vinylbenzylhalogenid enthaltende Copolymere sich wiederholende Einheiten der folgenden Formel II

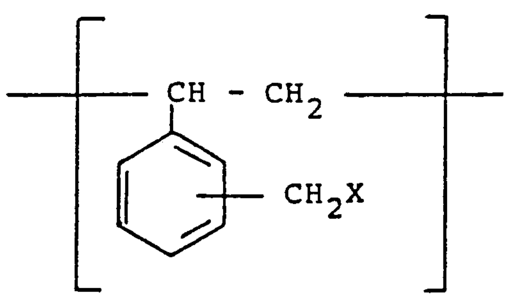 (II)

enthält, worin X Chlor, Brom oder Jod bedeutet.

4. Verfahren nach einem der vorhergehenden Ansprüche, dadurch gekennzeichnet, daß das Monomere Y in dem oder den Copolymeren ein Monomeres der folgenden Formel III

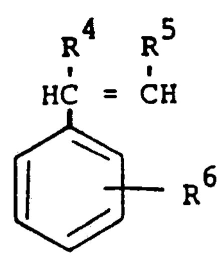 (III)

ist, worin $R^4$, $R^5$ und $R^6$, die gleich oder unterschiedlich sein können, je ein Wasserstoffatom, eine geradkettige Alkylgruppe mit 1 bis 8 Kohlenstoffatomen oder eine verzweigte Alkylgruppe mit 3 bis 6 Kohlenstoffatomen oder ein Monomeres der folgenden Formeln IV, V, VI, VII oder VIII

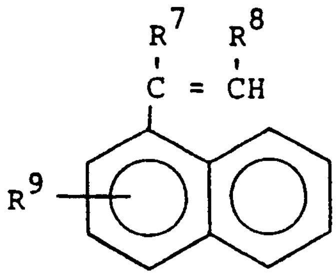
(IV)

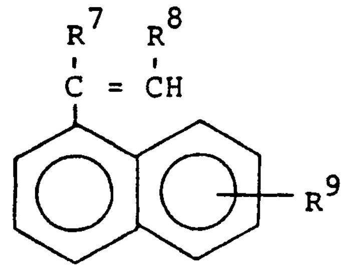
(V)

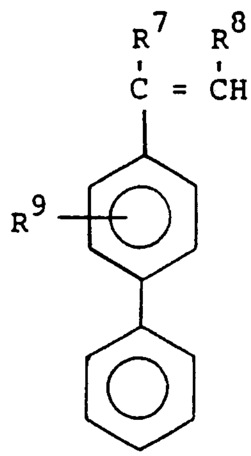
(VI)

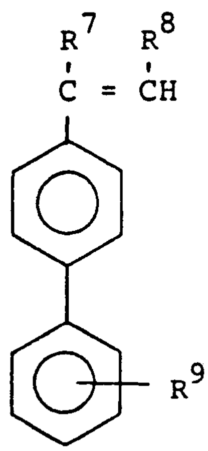
(VII)

oder

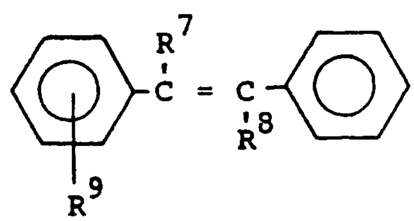
(VIII)

worin $R^7$, $R^8$ und $R^9$, die gleich oder unterschiedlich sein können, je ein Wasserstoffatom, eine geradkettige Alkylgruppe mit 1 bis 8 Kohlenstoffatomen oder eine verzweigte Alkylgruppe mit 3 bis 6 Kohlenstoffatomen bedeuten, oder ein aliphatisches Monomeres der folgenden Formel IX

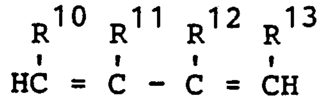
(IX)

worin $R^{10}$, $R^{11}$, $R^{12}$ und $R^{13}$ gleich oder unterschiedlich sein können und je ein Wasserstoffatom oder eine geradkettige Alkylgruppe mit 1 bis 8 Kohlenstoffatomen oder eine verzweigte Alkylgruppe mit 3 bis 6 Kohlenstoffatomen bedeuten, oder ein aliphatisches Monomeres der folgenden Formel X

$$CH_2{=}CH{-}(CH_2)_q{-}CH_3 \quad (X)$$

worin q für 0 bis 10 steht.

5. Verfahren nach mindestens einem der vorhergehenden Ansprüche, dadurch gekennzeichnet, daß als Lösungsmittel halogenierte Kohlenwasserstoffe, Dimethylformamid oder Mischungen dieser Lösungsmittel verwendet werden.

6. Verfahren nach mindestens einem der vorhergehenden Ansprüche, dadurch gekennzeichnet, daß die trägerfreie oder trägergestützte Membran nach dem Trocknen einer thermischen Nachvernetzung unterworfen wird.

7. Verfahren nach Anspruch 6, dadurch gekennzeichnet, daß die trägerfreie oder trägergestützte Membran zur Quaternisierung noch nicht umgesetzter Vinylbenzylchloridsegmente mit einer niedermolekularen Stickstoffverbindung und zur Umsetzung der noch nicht quaternisierten Vinylpyridinsegmente mit einem niedermolekularen Alkylhalogenid behandelt wird, wobei die Anwendung der N- und Cl-Reagentien nacheinander erfolgt und/oder die Membran einer thermischen Nachvernetzung unterworfen wird.

8. Verfahren nach Anspruch 7, dadurch gekennzeichnet, daß als niedermolekulare Stickstoffverbindung Pyridin oder Vinylpyridin und als niedermolekulares Alkylhalogenid Benzylchlorid oder Vinylbenzylchlorid oder Xylylendichlorid ($ClCH_2—C_6H_4—CH_2Cl$) verwendet werden.

**Revendications**

1. Procédé de préparation d'une membrane échangeuse d'anions flexible et perméable sélectivement par action d'une solution d'un polymérisat renfermant une pyridine polyvinyle et/ou son dérivé comme substance d'échange des anions sur un matériau support et évaporateur du solvant, caractérisé en ce qu'une solution d'un copolymère constituée de pyridine vinylique et/ou d'un dérivé et d'un monomère Y, qui ne libère des ions ni au cours de la formation du réseau ni dans l'électrolyte, ou bien d'un mélange de tel monomère qui renferme additionnellement soit un halogénure polyvinylbenzylique ou un mélange d'halogénures polyvinylbenzyliques ou bien un second copolymère d'halogénure vinylbenzylique et un ou plusieurs monomères Y dans un rapport stoéchiométrique d'azote de la pyridine vinylique par rapport à l'halogène de l'halogénure vinylbenzylique (N:X) est de 1:1 à 10:1, est étendue sur le matériau support, on soumet le film à l'état humide à une quaternisation et on sépare le cas échéant la membrane obtenue du matériau support.

2. Procédé selon la revendication 1, caractérisé en ce que le copolymère renferme des motifs répétés de vinylpyridine des formules suivantes Ia ou Ib:

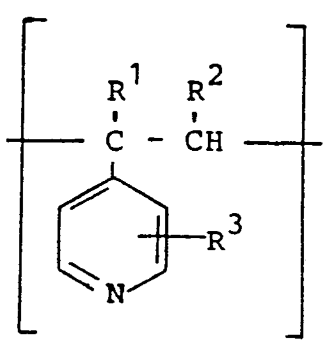 (Ia) et/ou 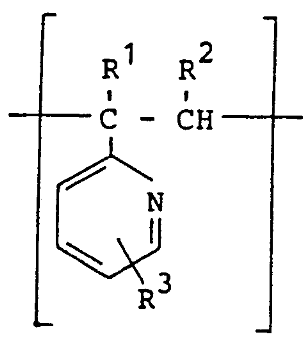 (Ib)

où $R^1$, $R^2$ et $R^3$, identiques ou différents, signifient chacun un atome d'hydrogène ou un groupe alkyle à chaîne droite ou ramifiée de 1 à 4 atomes de carbone.

3. Procédé selon la revendication 1 ou 2, caractérisé en ce que l'halognènure polyvinylbenzylique ou le copolymère renfermant l'halogénure vinylbenzylique comprend des motifs répétés de formule générale II:

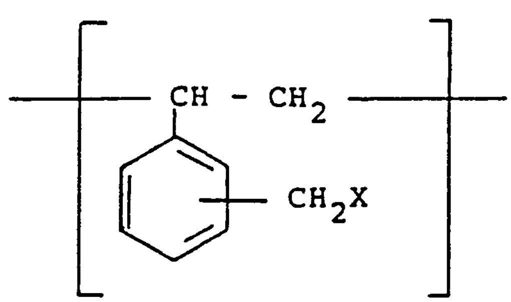

(II)

dans laquelle X signifie le chlore, le brome ou l'iode.

4. Procédé selon l'une quelconque des revendications précédentes, caractérisé en ce que le monomère Y dans le ou les copolymères est un monomère de formule suivante III:

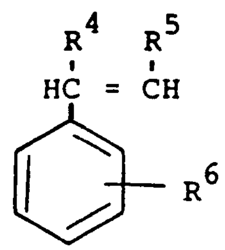

(III)

dans laquelle $R^4$, $R^5$ et $R^6$, identiques ou différents, représentent l'hydrogène, un groupe alkyle à chaîne droite de 1 à 8 atomes de carbone ou bien un groupe alkyle à chaîne ramifiée de 3 à 6 atomes de carbone, ou bien un monomère de formules générales IV, V, VI, VII ou VIII:

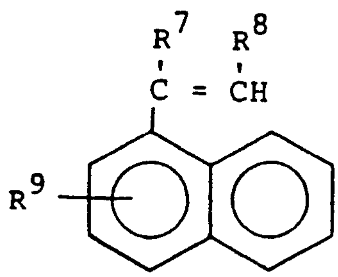

(IV)

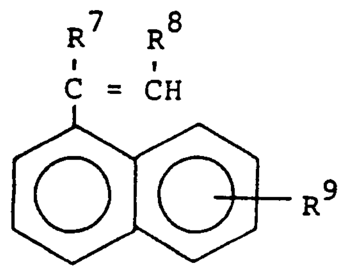

(V)

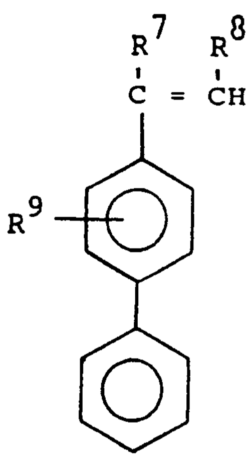

(VI)

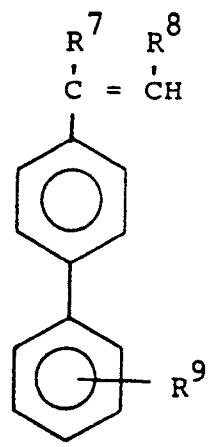

(VII)

ou

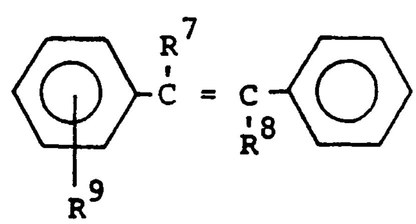

(VIII)

dans lesquelles $R^7$, $R^8$ et $R^9$, identiques ou différents, représentent un atome d'hydrogène, un groupe alkyle à chaîne droite de 1 à 8 atomes de carbone ou un groupe alkyle à chaîne ramifée de 3 à 6 atomes de carbone, ou un monomère aliphatique de formule suivante IX:

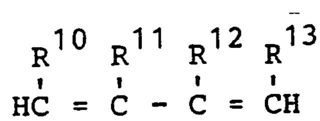

(IX)

dans laquelle $R^{10}$, $R^{11}$, $R^{12}$ et $R^{13}$, identiques ou différents, représentent un atome d'hydrogène, un groupe alkyle à chaîne droite de 1 à 8 atomes de carbone ou un groupe alkyle à chaîne ramifée de 3 à 6 atomes de carbone, ou bien un monomère aliphatique de formule générale suivante X:

$$CH_2{=}CH{-}(CH_2)_q{-}CH_3 \quad (X)$$

dans laquelle q représente un nombre compris entre 1 et 10.

5. Procédé selon au moins une des revendications précédentes, caractérisé en ce qu'on utilise comme solvant des composés carbonés halogénés, le diméthylformamide ou un mélange de ces solvants.

6. Procédé selon au moins une des revendications précédentes, caractérisé en ce que la membrane libérée du support ou protégée par celui-ci est soumise après séchage à une réticulation thermique.

7. Procédé selon la revendication 6, caractérisé en ce que la membrane libérée du support ou protégée par celui-ci est traitée pour la quaternisation des motifs chlorure de vinylbenzyle non encore transformés à l'aide d'un composé azoté à faible masse moléculaire et pour la transformation des motifs vinylpyridine, non encore quaternisés à l'aide d'un halogénure d'alkyle de faible masse moléculaire, l'utilisation des réactifs azotés et chlorés étant mise en oeuvre l'un après l'autre, et/ou la membrane étant soumise à une réticulation thermique.

8. Procédé selon la revendication 7, caractérisé en ce qu'on utilise comme composé azoté à faible masse moléculaire la pyridine ou la vinylpyridine et comme composé halogénure d'alkyle le chlorure de benzyle ou le chlorure de vinylbenzyle ou bien le dichlorure xylylène ($ClCH_2{-}C_6H_4{-}CH_2Cl$).

**Claims**

1. A process for the production of a permselective and flexible anion exchanger membrane by application of a solution of a polymer containing polyvinyl pyridine and/or a derivative thereof as anion exchanger to a support material and evaporation of the solvent, characterized in that a solution of a copolymer of vinyl pyridine and/or a derivative thereof and a monomer Y, which does not form fixed ions either during formation of the network or in the electrolyte, or a mixture of such monomers additionally containing either a polyvinyl benzyl halide or a mixture of polyvinyl benzyl halides or a second copolymer of vinyl benzyl halide and one or more monomers Y in a stoichiometric ratio of vinyl pyridine nitrogen to vinyl benzyl halide (N:X) of 1:1 to 10:1 is applied to the support material, the film is quaternized in its wet state and the membrane formed is optionally removed from the support material.

2. A process as claimed in claim 1, characterized in that the copolymer of vinyl pyridine contains recurring units corresponding to formula Ia or Ib

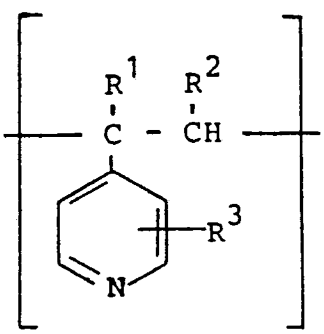

(Ia) and/or

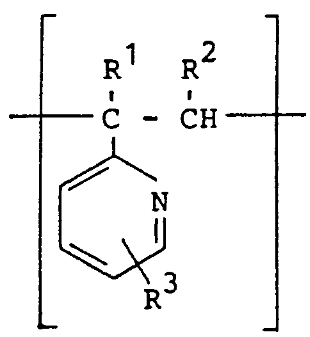

(Ib)

in which $R^1$, $R^2$ and $R^3$ may be the same or different and each represent a hydrogen atom or a linear or branched alkyl group containing 1 to 4 carbon atoms.

3. A process as claimed in claim 1 or 2, characterized in that the polyvinyl benzyl halide or the copolymer containing vinyl benzyl halide contains recurring units corresponding to formula II

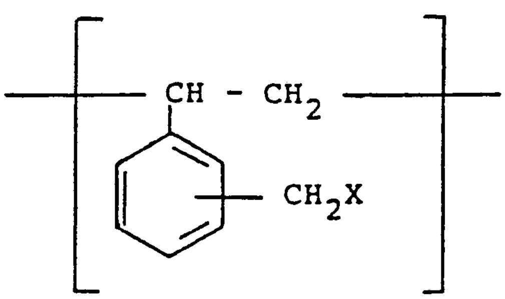

(II)

in which X is chlorine, bromine or iodine.

4. A process as claimed in any of the preceding claims, characterized in that the monomer Y in the copolymer(s) is a monomer corresponding to formula III

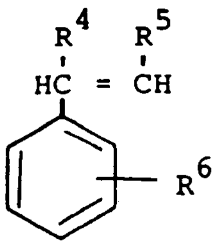

(III)

in which $R^4$, $R^5$ and $R^6$ may be the same or different and each represent a hydrogen atom, a linear alkyl group containing 1 to 8 carbon atoms or a branched alkyl group containing 3 to 6 carbon atoms, or a monomer corresponding to formula IV, V, VI, VII or VIII

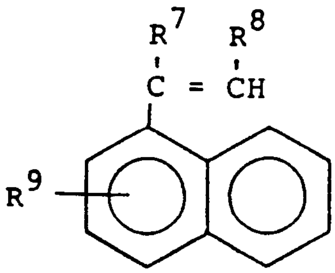

(IV)

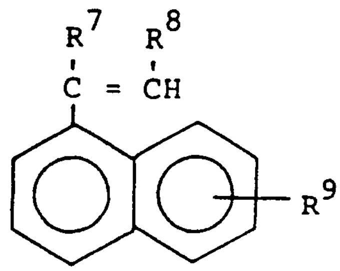

(V)

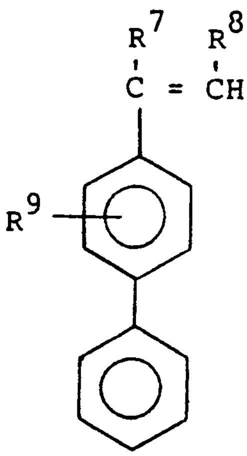

(VI)

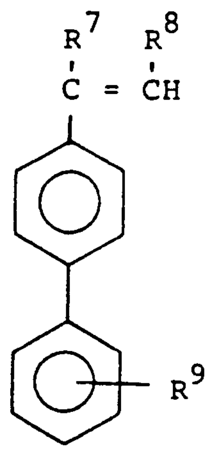

(VII)

or

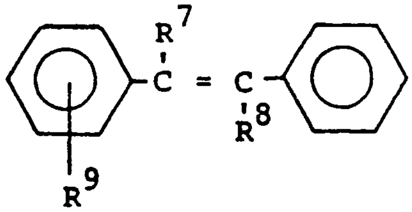

(VIII)

in which $R^7$, $R^8$ and $R^9$ may be the same or different and each represent a hydrogen atom, a linear alkyl group containing 1 to 8 carbon atoms or a branched alkyl group containing 3 to 6 carbon atoms, or an aliphatic monomer corresponding to formula IX

$$\begin{matrix} R^{10} & & R^{11} & & R^{12} & & R^{13} \\ | & & | & & | & & | \\ HC & = & C & - & C & = & CH \end{matrix} \qquad (IX)$$

in which $R^{10}$, $R^{11}$, $R^{12}$ and $R^{13}$ may be the same or different and each represent a hydrogen atom or a linear alkyl group containing 1 to 8 carbon atoms or a branched alkyl group containing 3 to 6 carbon atoms, or an aliphatic monomer corresponding to formula X

$$CH_2{=}CH{-}(CH_2)_q{-}CH_3 \qquad (X)$$

in which q has a value of 0 to 10.

5. A process as claimed in at least one of the preceding claims, characterized in that halogenated hydrocarbons, dimethyl formamide or mixtures of these solvents are used as the solvent.

6. A process as claimed in at least one of the preceding claims, characterized in that the support-free or supported membrane is subjected after drying to thermal post-crosslinking.

7. A process as claimed in claim 6, characterized in that, to quaternize unreacted vinyl benzyl chloride segments, the support-free or supported membrane is treated with a low molecular weight nitrogen compound and, to react unquaternized vinyl pyridine segments, it is treated with a low molecular weight alkyl halide, the N and Cl reagents being successively applied, and/or the membrane is subjected to thermal post-crosslinking.

8. A process as claimed in claim 7, characterized in that pyridine or vinyl pyridine is used as the low molecular weight nitrogen compound while benzyl halide or vinyl benzyl chloride or xylylene dichloride ($ClCH_2{-}C_6H_4{-}CH_2Cl$) is used as the low molecular weight nitrogen compound.